# EUROPEAN PATENT APPLICATION

(11) **EP 2 849 174 A1**
(43) Date of publication of application: **18.03.2015**
(21) Application number: 13787773.4
(22) Date of filing: 19.04.2013
(51) Int. Cl.: G09F 13/20, H02N 11/00, H04B 5/00

(54) **STICKER-TYPE LIGHT-EMITTING DEVICE USING NEAR FIELD COMMUNICATION**

(30) Priority: 11.05.2012 KR 20120050472
(71) Applicant: PARK, Sang Jin, Gunpo-si Gyeonggi-do 435-744 (KR)
(72) Inventor: KIM, Jin Hae, Seoul 135-950 (KR)
(74) Representative: Vinsome, Rex Martin
(86) International application number: PCT/KR2013/003340
(87) International publication number: WO 2013/168909

(57) **Abstract**

The sticker-shape light-emitting device using a near field communication system includes: a main body having a panel shape; an induction coil that is disposed on a front surface of the main body as a coil shape and converts an electromagnetic wave to electricity by an electromagnetic induction phenomenon, wherein the electromagnetic wave is emitted from a terminal that can have non-contact communication; a light-emitting diode that emits light by electrical energy generated from the induction coil; and an adhesion unit that is disposed on a rear surface of the main body and on which an adhesive is coated so that the main body is attached to a specific surface of an object.

## Description

### TECHNICAL FIELD

The inventive concept relates to an apparatus that can emit light by using a near field communication frequency as an energy source, and more particularly, to a sticker-shape light-emitting device that can be used for advertisements or decoration.

### BACKGROUND ART

A radio frequency (RF) card is formed by applying an identification technique to a card by using a radio frequency. An RF technique is a technique that transmits information of an object and its surrounding environment to a network by using a near field communication frequency through an antenna and a terminal (reader) by attaching a chip and an antenna that use an RF as a medium to the object and processes the information of the object, and is one of the non-contact identification techniques. That is, the RF card can read or revise card information by transmitting and receiving specific information between a reader and a terminal by communicating at a near distance after storing information on a chip and an antenna.

One of the general examples of RF cards is a transportation card. The transportation card generally calculates a fare through a non-contact method with a reader that is installed on a ticket gate of a bus, taxi, or subway. Also, the RF card is applied to various slot machines that are referred to as a vending machine. Korean Patent Publication No. 2000-0013178 discloses a vending machine that can sell articles by using an RF card.

Generally, an RF reader continuously and repeatedly emits an electromagnetic wave so that information can be transmitted or received to or from an RF card. However, in recent years, due to the depletion of fossil fuels and environmental protection, many countries have made efforts to develop eco-friendly green energy. Also, the importance of low power consumption is emphasized in the same vein. In particular, recently, many countries have done a power saving campaign due to the shortage of power. Therefore, it is essential to develop products that can save electrical energy in an environment of electrical power shortage.

Recently, as a kind of RF communication system, a near field communication (NFC) system that is used for wireless calculation by using near field communication has drawn attention.

### DETAILED DESCRIPTION OF THE INVENTIVE CONCEPT

### TECHNICAL PROBLEM

The inventive concept provides a device that emits light by using a frequency that is generated in a near field communication system including an RF, and thus, the light-emitting device can be used for advertisements and decorations that do not require an additional energy source such as a battery.

### TECHNICAL SOLUTION

According to an aspect of the inventive concept, there is provided a sticker-shape light-emitting device using a near field communication system, wherein the sticker-shape light-emitting device includes: a main body having a panel shape; an induction coil that is disposed on a front surface of the main body as a coil shape and converts an electromagnetic wave to electricity by an electromagnetic induction phenomenon, wherein the electromagnetic wave is emitted from a terminal that can have non-contact communication; a light-emitting diode that emits light by electrical energy generated from the induction coil; and an adhesion unit that is disposed on a rear surface of the main body and on which an adhesive is coated so that the main body is attached to a specific surface of an object.

### ADVANTAGEOUS EFFECTS

The light-emitting device according to the inventive concept is attached to an article in a sticker shape and uses an electromagnetic wave as an energy source, wherein the electromagnetic wave is generated from a terminal or a reader that constitutes a non-contact near field communication system, and is attached to an electronic device that includes a near field communication terminal or to an article that is used near the electronic device to effectively advertise or decorate, and thus, although there is no additional battery, the light-emitting device can be operated as an excellent mobile advertisement or decoration device.

### DESCRIPTION OF THE DRAWINGS

FIG. 1 is a perspective view of a light-emitting device according to an embodiment of the inventive concept;
FIG. 2 is a schematic perspective view of an internal structure of the light-emitting device of FIG. 1;
FIG. 3 is a cross-sectional view taken along line III-III of FIG. 1;
FIG. 4 is a conceptual diagram of attaching a light-emitting device to a rear surface of a mobile phone;
FIG. 5 is a plan view of mounting an induction coil and a light-emitting diode that constitute a light-emitting device according to an embodiment of the inventive concept on a single flexible printed circuit board (FPCB); and
FIG. 6 is a conceptual diagram of attaching a light-emitting device according to an embodiment of the inventive concept on a purse.

### BEST MODE

A light-emitting device according to an embodiment of the inventive concept will now be described in detail with reference to the accompanying drawings.

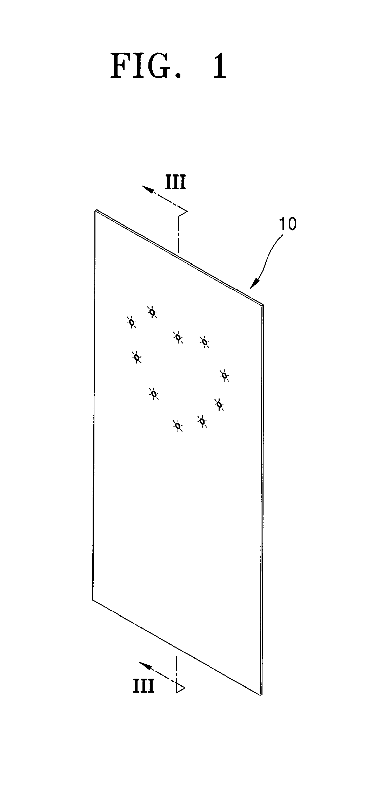

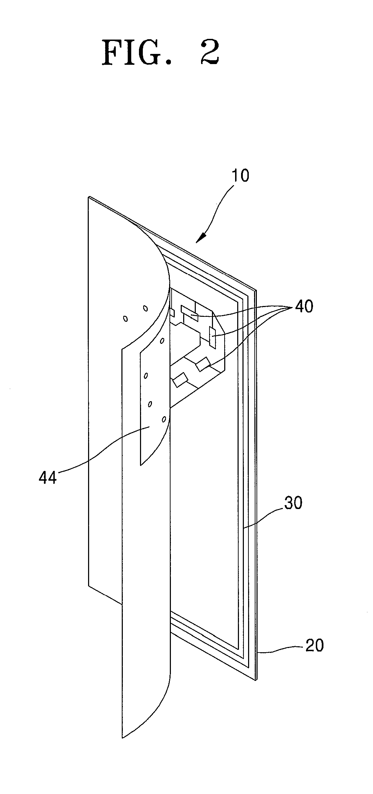

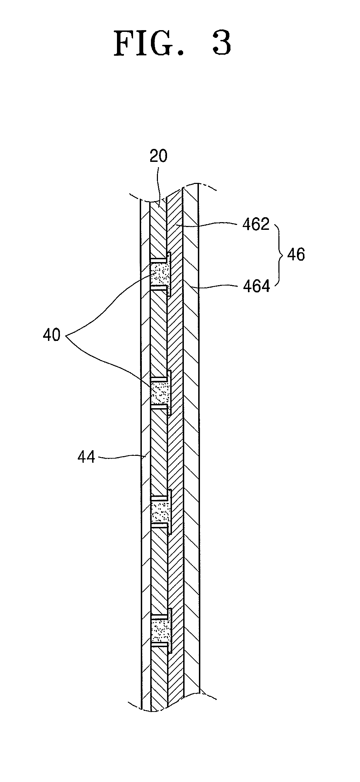

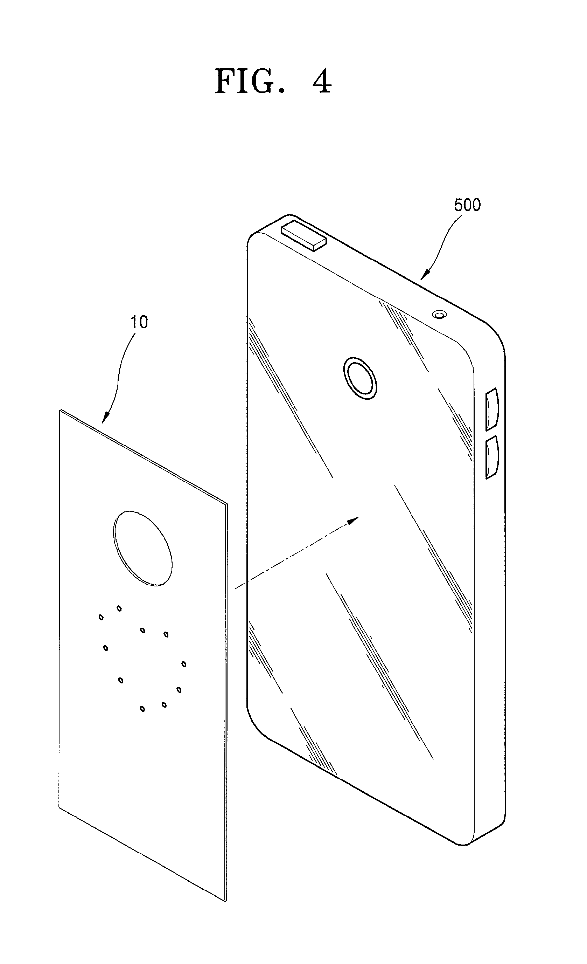

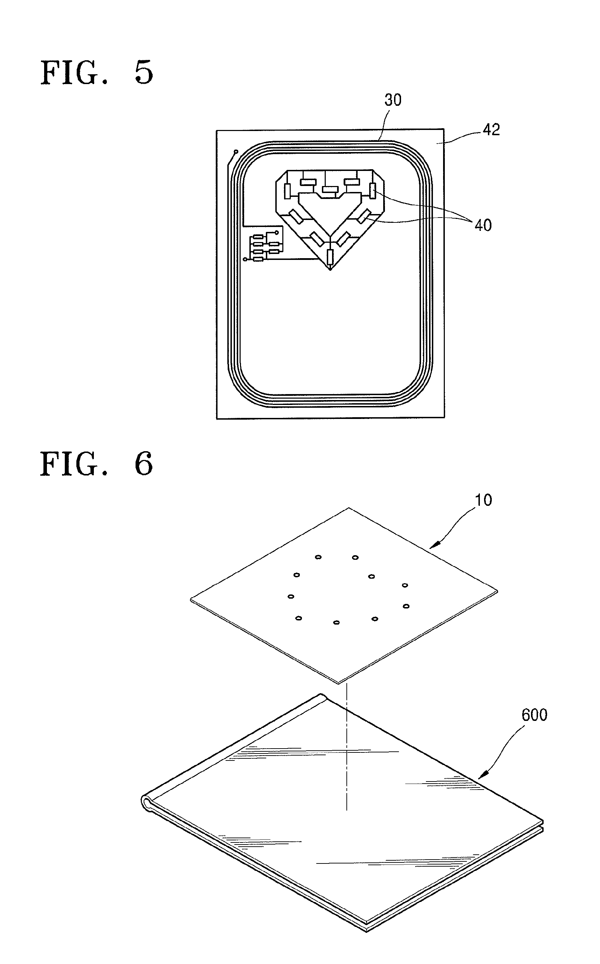

FIG. 1 is a perspective view of a light-emitting device according to an embodiment of the inventive concept. FIG. 2 is a schematic perspective view of an internal structure of the light-emitting device of FIG. 1. FIG. 3 is a cross-sectional view taken along line III-III of FIG. 1. FIG. 4 is a conceptual diagram of attaching a light-emitting device to a rear surface of a mobile phone. FIG. 5 is a plan view of mounting an induction coil and a light-emitting diode that constitute a light-emitting device according to an embodiment of the inventive concept on a single flexible printed circuit board (FPCB). FIG. 6 is a conceptual diagram of attaching a light-emitting device according to an embodiment of the inventive concept on a purse.

Referring to FIGS. 1 through 6, a sticker-shape light-emitting device using near field communication 10 (hereinafter referred to as, the light-emitting device 10) includes a main body 20, an induction coil 30, a light-emitting diode 40, a display unit 44, and an adhesion unit 46.

The main body 20 is formed in a panel or a sheet shape. The main body 20 may be formed of, for example, paper, synthesized resin, etc. That is, the main body 20 is a thin panel-shape member.

The main body 20 may have a degree of flexibility by which the main body 20 can be bended by a force of a human finger.

The induction coil 30 is disposed on a surface, for example, a front surface of the main body 20. The induction coil 30 may be formed of a material having a favorable electrical conductivity like copper. The induction coil 30 is disposed on a front surface of the main body 20 in a coil shape. The induction coil 30 converts an electromagnetic wave generated from a terminal that can have non-contact field communication to electricity by an electromagnetic induction phenomenon. That is, the induction coil 30 is a kind of antenna that can induce current according to the Faraday's law of induction by an electromagnetic wave that varies around the induction coil 30. The induction coil 30 functions as a power supply device for light-emitting of the light-emitting diode 40 described below. When an RF reader or an NFC transmitter-receiver module(terminal) are present around the induction coil 30, the induction coil 30 induces electricity from an electromagnetic wave generated from the RF reader or the NFC transmitter-receiver module.

The light-emitting diode 40 is a part that emits light by electricity generated from the induction coil 30.

The light-emitting diode 40 is disposed to emit light by being electrically connected to the induction coil 30. Parts, such as a capacitor, an amplifier, and a noise filter may be disposed between the light-emitting diode 40 and the induction coil 30. The light-emitting diode 40 may be disposed in plural numbers. As depicted in FIG. 3, the light-emitting diode 40 may be inserted into a groove unit that penetrates through the main body 20 or an FPCB 42 described below. Also, the light-emitting diode 40 may be formed in a state of mounting in the FPCB 42. In FIG. 5, the induction coil 30 and the light-emitting diode 40 are mounted in a single FPCB 42. In this way, the induction coil 30 and the light-emitting diode 40 may be manufactured as a single unit. The light-emitting diode 40 may be mounted in the FPCB 42 by various prior art. For example, the light-emitting diode 40 depicted in FIGS. 2 or 5 shows so called a "top view-type" light-emitting diode. As depicted in FIG. 5, when the induction coil 30 and the light-emitting diode 40 are manufactured to be mounted on a single FPCB, manufacturing cost is remarkably reduced and the efficiency of assembly is improved when compared to when the induction coil 30 is separately manufactured and combined. As obvious to one of ordinary skill in the art course, the induction coil 30 is formed in advance on the main body 20 by using an in-lay method using copper wire and afterwards, an FPCB, on which the light-emitting diode 40 is mounted, may be connected to the induction coil 30.The light-emitting diode 40 may be disposed in so called an edge-type besides the top view- type described above. When the light-emitting diode 40 is disposed as an edge-type, the light-emitting diode 40 may be disposed on a side surface of an optical propagation plate (not shown) that can favorably transmit light. The optical propagation plate is a thin plate-shape member. The optical propagation plate is a member that transmits light incident from the light-emitting diode 40. The optical propagation plate may be formed of one of, for example, polyacrylates (polyacrylonitrile), polycarbonate (PC), polyethylene terephthalate (PET), polyurethane (PU), poly methyl methacrylate (PMMA), and polyvinylchloride (PVC). Due to the density difference between the adjacent interface and the optical propagation plate, light that is incident to the optical propagation plate is totally reflected at the adjacent interface and an interface of the optical propagation plate, and thus, the light propagates along an inner side of the optical propagation plate. The optical propagation plate may be formed of a transparent material or a colored material. An optical reflection unit (not shown) may be formed to protrude on the rear surface of the optical propagation plate. The optical reflection unit reflects light incident from the light-emitting diode 40 towards the front surface of the optical propagation plate. That is, the optical reflection unit suddenly changes the direction of light that propagates along the inner side of the optical propagation plate, that is, reflects the light to an angle that is greater than an angle at which total reflection of the light can occur to emit light to the outside of the optical propagation plate. Accordingly, a portion of the light that propagates along the optical propagation plate is emitted to the outside of the display unit 44 by the optical reflection unit. The optical reflection unit may include one of a dot pattern, a line pattern, and a surface pattern. The optical reflection unit may be formed by ink printing on the rear surface of the optical propagation plate. The optical reflection unit may be formed by using a well-known printing method, such as an off-set printing method, a screen printing method, and a pad printing method. The optical reflection unit may also be formed as line-shape letters. The optical reflection unit may be formed in plural with different colors. The light-emitting device 10 may be effectively used to advertise or decorate by arranging the optical reflection unit in various ways. The optical reflection unit may include one selected from the group consisting of modified polyacrylates, modified polyurethane (PU), modified polyester (PE), and silicon dioxide (SiO₂). The optical reflection unit may be formed in an ink or paste according to viscosity and may be attached to the optical propagation plate. The optical reflection unit may be dried after printing to have a sufficient hardness by using an infrared (IR) drying method, a box oven drying method, or an ultraviolet (UV) light drying method. The optical reflection unit may include a fluorescent material. When the optical reflection unit includes a fluorescent material, the optical reflection unit may be configured to be colorful, besides white color. The fluorescent material that can be included in the optical reflection unit may be a sulfide of zinc, strontium, and barium for readily realizing colors. However, various kinds of fluorescent materials can be used. Also, the optical reflection unit may be formed on the optical propagation plate in an intaglio pattern by using a method, such as a laser method, a computerized numerical control (CNC) method, or an injection method without using ink.

The display unit 44 includes a transparent or semitransparent sheet and is attached to a front surface of the main body 20. That is, the display unit 44 may include a transparent or semitransparent pattern so that light generated from the light-emitting diode 40 is transmitted. The pattern may include pictures, texts, signals, or icons to be advertised or decorated. The display unit 44 may be a film type member through which texts or patterns are illuminated to the outside by the light generated from the light-emitting diode 40.

The adhesion unit 46 is provided to attach the main body 20 to a required position. That is, the adhesion unit 46 is disposed on a surface, for example, a rear surface of the main body 20 so that the main body 20 is attached to a surface of a specific object. The adhesion unit 46 may include a white sheet 462 and a protection sheet 464.

The white sheet 462 is attached to the rear surface of the main body 20. The white sheet 462 is a white sheet and functions to reflect light that is reflected towards the rear surface of the main body 20 towards the display unit 44. Both surfaces of the white sheet 462 are coated with an adhesive so that the white sheet 462 is attached to the main body 20.

The protection sheet 464 is attached to the rear surface of the white sheet 462. An adhesive may be coated on a surface or both surfaces of the protection sheet 464. When the adhesive is coated on both surfaces of the protection sheet 464, the light-emitting device 10 may be attached to a surface of a required object in a state that the protection sheet 464 is attached to the white sheet 462. However, when the adhesive is coated on only a surface of the protection sheet 464, after separating the protection sheet 464 from the white sheet 462, the light-emitting device 10 may be attached to a surface of a required object. Since the protection sheet 464 is provided to protect the attachment of foreign materials to the rear surface of the white sheet 462, when an adhesive is coated on the rear surface of the white sheet 462, the object of the current inventive concept may be achieved although an adhesive is not coated on the protection sheet 464.

As described above, the light-emitting device 10 may be used to advertise or decorate by being simply attached as a sticker-shape to a rear surface of a mobile phone 500 on which an NFC module is provided as depicted in FIG. 4. The light-emitting device 10 according to an embodiment of the inventive concept may be simply attached to, for example, a transportation card, a card purse 600 (refer to FIG. 6), or a mobile phone case besides the type depicted in FIG. 4. The light-emitting device according to the inventive concept may be used to advertise or decorate without an additional power source, and since it is formed as a sticker-shape, manufacturing cost is low and applicability is high.

While the inventive concept has been particularly shown and described with reference to exemplary embodiments thereof, it will be understood that various changes in form and details may be made therein without departing from the spirit and scope of the following claims.

### MODE OF THE INVENTIVE CONCEPT

The sticker-shape light-emitting device using a near field communication system according to an embodiment of the inventive concept includes: a main body having a panel shape; an induction coil that is disposed on a front surface of the main body as a coil shape and converts an electromagnetic wave to electricity by an electromagnetic induction phenomenon, wherein the electromagnetic wave is emitted from a terminal that can have non-contact communication; a light-emitting diode that emits light by electrical energy generated from the induction coil; and an adhesion unit that is disposed on a rear surface of the main body and on which an adhesive is coated so that the main body is attached to a specific surface of an object.

The light-emitting device may further include a film-shape display unit that is disposed to cover the light-emitting diode and through which light emitted from the light-emitting diode is illuminated to the outside, wherein the display unit may include a white sheet and a protection sheet.

The adhesion unit may include a white sheet that is attached to the rear surface of the main body, and a protection sheet that is attached to a rear surface of the white sheet.

An adhesive may be coated on a surface or both surfaces of the protection sheet.

The induction coil and the light-emitting diode may be mounted on a single FPCB.

## Claims

1. A sticker-shape light-emitting device using a near field communication system comprises:
a main body having a panel shape;
an induction coil that is disposed on a front surface of the main body as a coil shape and converts an electromagnetic wave to electricity by an electromagnetic induction phenomenon, wherein the electromagnetic wave is emitted from a terminal that can have non-contact communication;
a light-emitting diode that emits light by electrical energy generated from the induction coil; and
an adhesion unit that is disposed on a rear surface of the main body and on which an adhesive is coated so that the main body is attached to a specific surface of an object.

2. The sticker-shape light-emitting device of claim 1, wherein the light-emitting device further comprises a film-shape display unit that is disposed to cover the light-emitting diode and illuminates light emitted from the light-emitting diode to the outside, wherein the display unit comprises a transparent or semitransparent part.

3. The sticker-shape light-emitting device of claim 1, wherein the adhesion unit comprises a white sheet that is attached to the rear surface of the main body, and a protection sheet that is attached to a rear surface of the white sheet.

4. The sticker-shape light-emitting device of claim 3, wherein an adhesive is coated on a surface or both surfaces of the protection sheet.

5. The sticker-shape light-emitting device of claim 1, wherein the induction coil and the light-emitting diode are mounted on a single flexible printed circuit board.

6. The sticker-shape light-emitting device of any one of claims 1 through 5, wherein the main body has a degree of flexibility that is bendable by a force of a human finger.
